# EUROPEAN PATENT APPLICATION

(11) **EP 0 736 466 A1**
(43) Date of publication of application: **09.10.1996**
(21) Application number: 96201355.3
(22) Date of filing: 28.07.1994
(51) Int. Cl.: B65G 15/08, B65G 15/64

(54) **Tubular belt conveyor**

(30) Priority: 05.08.1993 JP 194633/93; 05.08.1993 JP 194634/93
(62) Divisional of application: 94305606.9
(71) Applicant: Bridgestone Corporation, Tokyo (JP)
(72) Inventor: Kuroda, Kimihide, Kitakyushu-shi, Fukuoka-ken (JP)
(74) Representative: Ben-Nathan, Laurence Albert

(57) **Abstract**

A flat belt (1) is rolled up into a tubular shape in which material is wrapped and conveyed between a pair of pulleys (2). While the belt (1) is transformed from a tubular shape to a flat shape and vice versa, the belt passes through guide rollers (9) in guide frames (8). A dummy pulley (34) and expansion rollers (31) are provided while the belt (1) is transformed between tubular and flat shapes, thereby preventing the belt (1) from biasing or folding back.

## Description

### BACKGROUND OF THE INVENTION

The present invention relates to a tubular belt conveyor in which an endless conveyor belt is rolled up into a tubular form in which material is wrapped and conveyed.

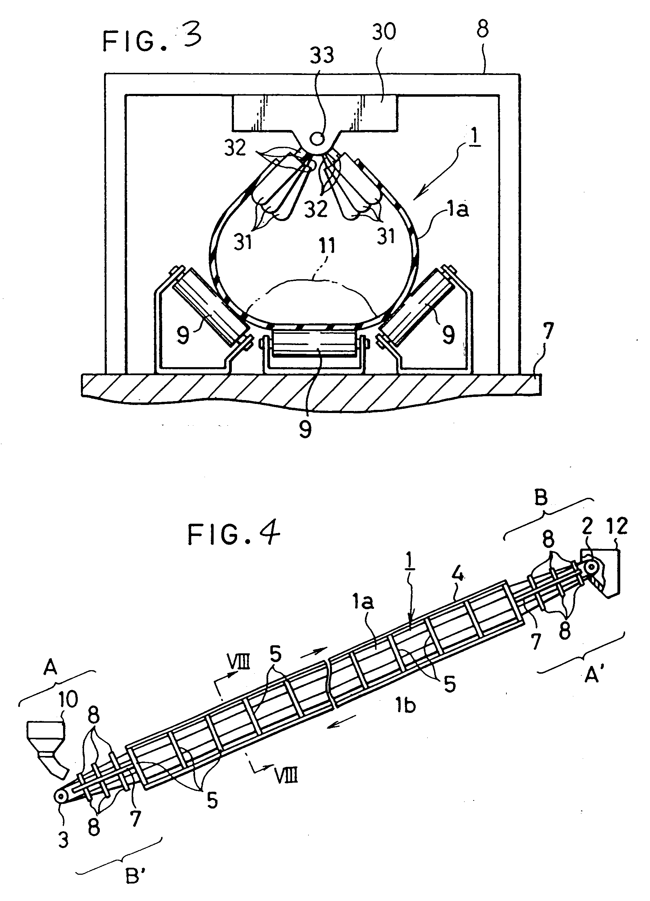

With respect to Figs. 4 to 7, a conventional tubular belt conveyor will be described, in which an endless conveyor belt 1 is rolled out to a flat shape which is wound around a pair of pulleys 2 and 3, and is circulated by rotating any of the pulleys 2 and 3 by drive means such as a motor (not shown). Going and returning paths 1a and 1b of the conveyor belt 12 pass through openings 5c in the middle of upper and lower chambers 5a and 5b of a plurality of shape-maintaining frames 5 fixed to support frame 5 at a certain distance along a conveying direction between the pulleys 2 and 3, and the belt 1 is roller up to a tubular form by a plurality of shape-maintaining rollers 6 around the opening 5c.

As shown in Fig. 4, in trough transforming sections "A", "A'", "B" and "B'" in which the conveyor belt 1 is rolled up into a tubular shape from a flat shape wound on one of the pulleys 2 and 3, or is rolled out from a tubular shape into a flat shape wound on the other of pulleys 2 and 3, the conveyor belt 1 is guided by guide rollers 9 pivoted to a plurality of guide frames 8 fixed to frames 7 which extend from the ends of the support frame 4.

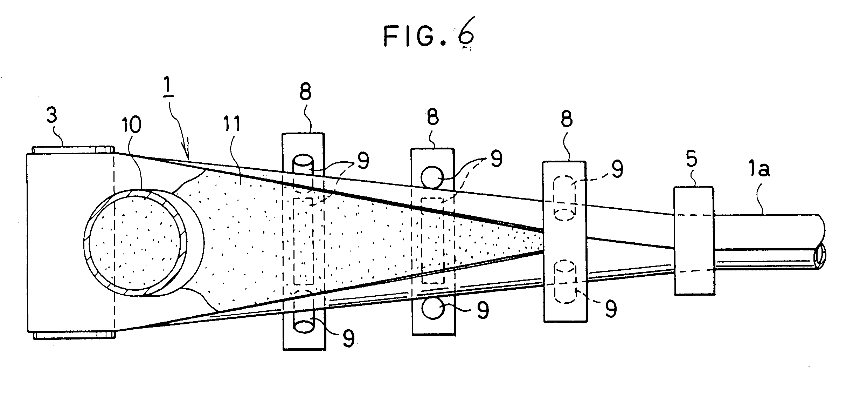

As shown in Fig. 6, while the conveyor belt 1 which is rolled out to a flat shape and rotates around the rear pulley 3 is rolled up through the guide frames 8 of the trough transforming section "A", it encloses material 11 thrown from a supply hopper 10. Then, the belt 1 passes through the upper opening 5c of each of the shape-maintaining frame 5 and is rolled out to a flat shape while it passes through the guide frame 8 in the trough transforming section "B". When the belt 1 is rotated around the front pulley 2, the material 11 is thrown onto a receiving hopper 12, and then, it is rolled up into a tubular shape again in the trough transforming section "A'" and passes through the lower opening 5c of the guide frame 5. It is rolled out to a flat shape in the trough transforming section "B'" and circulated around the rear pulley 3.

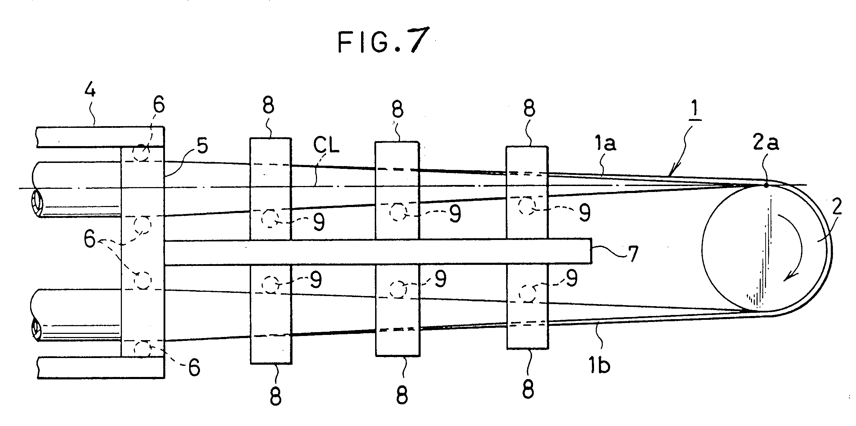

The foregoing schematically mentions structure and operation of such a tubular belt conveyor. In the trough transforming section "B" of the conventional conveyor belt 1, as shown in Fig. 7, to extend the centre and side edges of the unfolded conveyor belt 1 equally by pulling force of the front pulley 2, an extension of the central line of the tubular belt 1 coincides with a top 2a of the outer circumference of the front pulley 2 which contacts the conveyor belt 1 or is positioned lower than the top 2a as mentioned in Japanese Patent Laid-Open Pub. No. 63-262320.

The arrangement of the rear pulley 3 and the conveyor belt 1 in the trough transforming section "A" is horizontally symmetrical with those in the trough transforming section "B" (not shown). The trough transforming sections "A'" and "B'" are vertically symmetrical with the trough transforming sections "B" and "A" respectively (not shown).

In the foregoing conventional tubular belt conveyor, the conveyor belt 1 which goes into the trough transforming section "B" is still tubular shape, and at the portion, the side edges of the conveyor belt 1 is not continuous, but is merely overlapped, thereby causing stresses of the side edges regardless of each other and lacking uniform distribution. Therefore, owing to slight twisting of the conveyor belt 1, difference in stress between the side edges occurs, thereby causing difference in elongation of the side edges, inclining U-shaped portion and deviating a flat belt to one side.

To avoid the disadvantages, an automatic centering roller is provided in the trough transforming section to prevent the belt from deviating sideward, but loads are also liable to be deviated or belt does not normally run by the automatic centering roller if the roller is damaged, thereby damaging the side edge of the conveyor belt 1 to the guide frame 8 and folding back the side edge.

### SUMMARY OF THE INVENTION

In view of the disadvantages in the prior art, it is an object to provide a tubular belt conveyor which prevents a conveyor belt from damaging the side edge of the belt and folding back if loads are deviated or a roller is damaged.

According to the present invention, there is provided a tubular belt conveyor comprising: a pair of pulleys; an endless conveyor belt which is wound around the pair of pulleys, the belt being rolled up into a tubular shape in which material is conveyed; a plurality of guide frames for guiding the belt to transform it from a tubular shape to a flat shape and vice versa; a dummy pulley adjacent to one of the pulleys and parallel therewith; and a pair of expansion rollers for expanding the side edges of the conveyor belt at one of the guide frames opposite to the pulley.

Depending on operation of detecting means for detecting sideward deviation of the belt, the deviation is corrected by automatic adjusting means.

While the belt is transformed from a tubular shape to a flat shape and vice versa, the side edges of the belt are equally expanded sidewards and pressed upward or downward by the dummy pulley. Then, the belt is wound on the pulley, thereby preventing the belt from deviating sideward and folding back.

### BRIEF DESCRIPTION OF THE DRAWINGS

The features and advantages of the invention will become more apparent based on detailed description of embodiments with respect to drawings wherein:
Fig. 1 is a side elevational view of an embodiment of the invention;
Fig. 2 is a top plan view of the same;
Fig. 3 is an enlarged sectional view taken along the line VI-VI in Fig. 3;
Fig. 4 is a schematic side elevational view of a conventional tubular belt conveyor;
Fig. 5 is an enlarged sectional view taken along the line VIII-VIII in Fig. 4;
Fig. 6 is a top plan view of the rear portion of the conventional tubular belt conveyor; and
Fig. 7 is a side elevational view of the same.

### DETAILED DESCRIPTION OF PREFERRED EMBODIMENTS

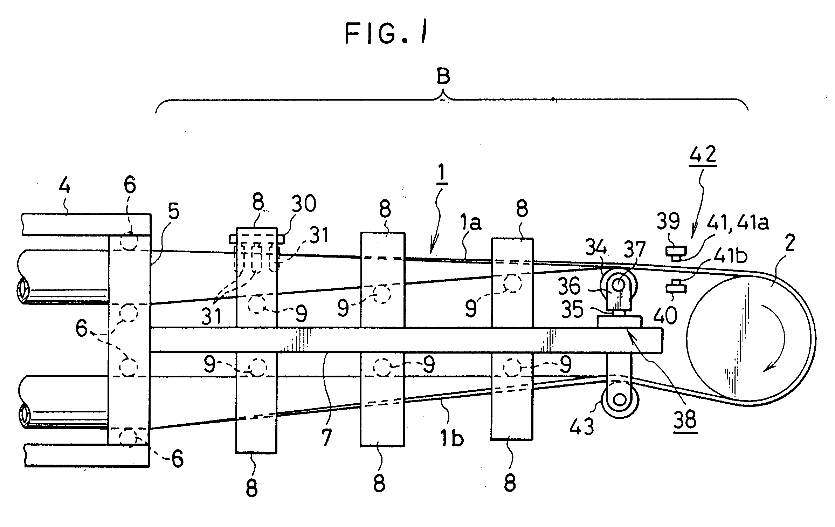

Figs. 1 to 3 illustrate an embodiment of the first invention. The same numerals are assigned to the same members as those in the prior art.

In the embodiment, a roller support 30 is fixed to the upper middle portion of the guide frame 8 adjacent to the tubular belt in the trough transforming section "B", and three pairs of expansion rollers 31 are provided in the roller support 30 to expand the side edges of the conveyor belt 1 which is being unfolded. A shaft 32 on which the expansion roller 31 is pivoted is fixed to the roller support 30 to increase an opening angle in a forward direction. Each of the shafts 32 may be fixed to the roller support 30, but the upper ends of all the shafts 32 are engaged around a support shaft 33. Each of the shafts 32 as inclined as above may be fastened by a nut (not shown) which fits around the support shaft 33 and all the shafts 32 may be fixed, so that mounting angle of the expansion roller 31 is adjustable.

Between the foremost guide frame 8 and the pulley 2 in the trough transforming section "B", a horizontal dummy pulley 34 is provided substantially in parallel with the pulley 2. The dummy pulley 34 is pivoted on a horizontal shaft 37 of a U-shaped pulley support frame 36, the middle lower surface of which is fixed to the upper end of a vertical rotation shaft 35 rotatably mounted in the front end of the frame 7. The dummy pulley 34 is rotated together with the pulley support frame 36 and the rotation shaft 34 by automatic adjusting means 38 on the frame 7.

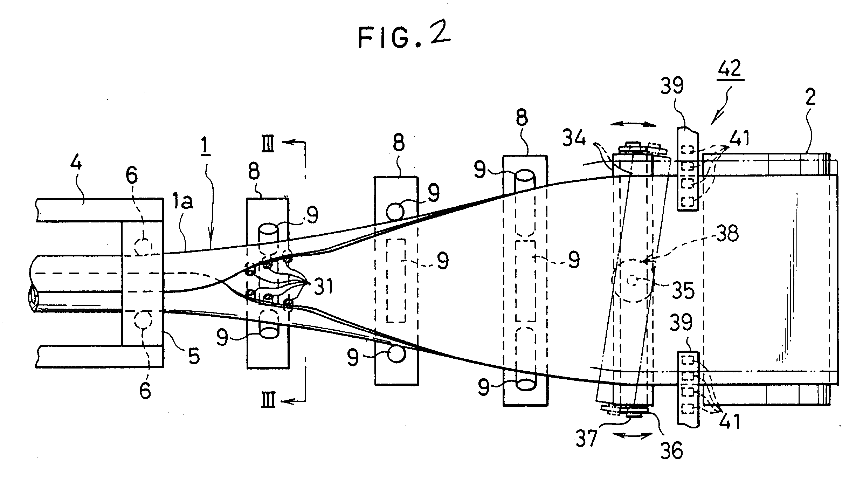

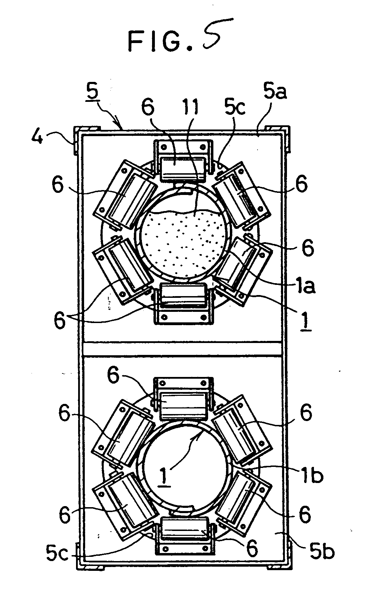

The automatic adjusting means 38 includes a motor; a reduction gear which comprises a worm, a worm wheel etc.; and a control device and automatically rotates the dummy pulley 34 slightly as described below by operation of detecting means 42 for detecting sideward deviation of the conveyor belt 1. Between the pulley 2 and the dummy pulley 34, there are provided a pair of support plates 39 and 40 between which the side edges of the conveyor belt 1 are inserted at a certain space respectively. On the opposite surfaces of the support plates 39 and 40, there are several pairs of photoelectric belt detecting sensors 41 which comprise light emitting elements 41a and light receiving elements 41b which act by blocking an optical path by the conveyor belt 1. The sensors 41 constitute the detecting means 42 for detecting sideward deviation of the conveyor belt 1. By comparing the number of the sensors 41 which act in right and left parts, it can be detected in which direction and how wide the conveyor belt 1 deviates. For example, when the conveyor belt 1 deviates rightward (upper direction in Fig. 5), three of the four right sensors 41 and only one of the four left sensors 41 act, so that it is detected that the conveyor belt 1 deviates rightward by one sensor 31. Based on the detection, to correct the deviation of the conveyor belt 1, the dummy pulley 34 is slightly rotated in a clockwise direction from a parallel position with the pulley as shown in a solid line to a position as shown in a two-dotted line in Fig. 2. Then, when the conveyor belt 1 passes on the dummy pulley 34, correcting force acts against the conveyor belt 1 to turn it in a direction perpendicular to a central axis of the dummy pulley, so that the conveyor belt 1 is returned to an original normal state as shown in the solid line in Fig. 2.

When the conveyor belt 1 is returned to the original normal state, each two of the right and left for sensors 41 acts, so that it is detected by the detecting means 42 that the conveyor belt 1 is returned to the normal position. Based on this matter, the dummy pulley 34 is returned by the automatic adjusting means 37 to a position in parallel with the pulley 2 as shown by a solid line in Fig. 2, and thereafter, the conveyor belt 1 runs in a normal state.

The numeral 43 denotes a pressing-up roller which is mounted to tee frame 7 to contact the lower surface of a returning path 1b of the conveyor belt 1 between the foremost guide frame 8 and the pulley 2 in the trough transforming section "A'".

In this embodiment, when the tubular conveyor belt 1 comes to the trough transforming section "B", the side edges of the conveyor belt 1 are expanded equally by the expansion roller 31, and, then, after the belt 1 is turned upward and transformed to a flat form, the belt 1 is wound on the pulley 2, so that the conveyor belt 1 is prevented from deviation sideward and from turning back when the belt 1 is wound on the pulley 2.

Preferably, the automatic adjusting means 37 may be provided for rotating the dummy pulley 34 in a correcting direction depending on the deviation of the conveyor belt 1 as mentioned above.

The foregoing description relates only to the trough transforming section "B", but may be applied to the trough transforming section "B'" which is symmetrical with the trough transforming section "B" vertically and horizontally.

The foregoing embodiment relates to a tubular belt conveyor by overlapping the inner circumferential surface of the side edge on the outer circumferential surface of the other side edge, but also may be applied to a tubular belt conveyor in which the side edges of the conveyor belt 1 abut to each other or in which the side edges is close to each other.

One, two, four or more pairs of the expansion rollers 31 may be provided.

The foregoing merely relates to preferred embodiments of the present invention, but various changes and modifications may be made by persons skilled in the art without departing from the scope of claims.

## Claims

1. A tubular belt conveyor comprising:
a pair of pulleys;
an endless conveyor belt which is wound around the pair of pulleys, the belt being rolled up into a tubular shape in which material is conveyed;
a plurality of guide frames provided with guide rollers for guiding the belt to transform it from a tubular shape to a flat shape and vice versa;
a dummy pulley adjacent to one of the pulleys and parallel therewith; and
a pair of expansion rollers for expanding the side edges of the conveyor belt at the guide frame adjacent to the tubular belt.

2. A tubular belt conveyor as defined in Claim 1 wherein the dummy pulley is rotatably mounted on a shaft perpendicular to an axis of the belt and the conveyor further comprises detecting means for detecting sideward deviation of the belt; and automatic adjusting means for rotating the dummy pulley on the shaft to correct the deviation automatically based on operation of the detecting means.

3. A tubular belt conveyor as defined in Claim 2 wherein the detecting means comprises several pairs of photoelectric belt detecting sensors which comprise light-emitting and light-receiving elements which act by blocking optical paths by the belt, it being detected in which direction and how wide the belt deviates by comparing how many numbers the right and left sensors act.

4. A tubular belt conveyor as defined in Claim 2 wherein the automatic adjusting means includes a motor; a reduction gear which comprises worm and worm wheel; and a control device.
